# EUROPEAN PATENT SPECIFICATION

(11) **EP 4 505 560 B1**
(45) Date of publication and mention of the grant of the patent: **15.07.2026**
(21) Application number: 23716522.0
(22) Date of filing: 31.03.2023
(51) Int. Cl.: H02G 1/08

(54) **DEVICE FOR LAYING A CABLE INTO A DUCT WITH A LUBRICATING CAPACITY**
VORRICHTUNG ZUM VERLEGEN EINES KABELS IN EINE ROHRLEITUNG MIT SCHMIERVERMÖGEN
DISPOSITIF DE POSE D'UN CÂBLE DANS UN CONDUIT À CAPACITÉ DE LUBRIFICATION

(30) Priority: 08.04.2022 CH 3972022
(43) Date of publication of application: 12.02.2025
(73) Proprietor: Plumettaz Holding S.A., 1880 Bex (CH)
(72) Inventor: GRIFFIOEN, Willem, 1880 Bex (CH); WACINSKI, Andrej, 1880 Bex (CH); VAN DER SLUIS, Rick, 1880 Bex (CH)
(74) Representative: Novagraaf International SA
(86) International application number: PCT/EP2023/058586
(87) International publication number: WO 2023/194264

(56) References cited:
- FR-A1- 2 655 783
- KR-Y1- 200 318 151
- US-B2- 7 992 685

## Description

The present invention relates to the field of the machines dedicated to introduce cables into ducts, and the invention relates in particular to the field of the machines, apparatuses and devices used at the entry of a duct to assist and drive the introduction of cables into the duct.

In prior art, it is known to use a driving fluid (gas or liquid) introduced at the entry of the duct with the cable so as to improve the transport of the cable into the duct and to increase the length of cable which can be installed. In prior art, it is also known to use lubrication to improve the introduction of cable, as disclosed in document US 7,992,685 B2. However, the disclosed system can experience leaks of lubricant and is complex with several units to install before laying the cable into the duct. Document US7992685B2 discloses a lubrication apparatus for installing fiber optic communication cables and copper cables in protective ducts and conduits. Document FR2655783A1 discloses an Injection gun, especially for pulling cables in a long duct, with lubricant deposition capacity.

The present invention aims to address the above-mentioned drawbacks of the prior art, and to propose first a device for laying an elongated element into a duct, which allows ease of use with reliable operation and which mitigates risks of lubricant leaks. The invention is defined in claim 1.

In this aim, a first aspect of the invention relates to a device for installing an elongated element into a duct, comprising a pressure housing having:
- an entry port for receiving the elongated element,
- an exit port arranged to be connected to the duct for introducing the elongated element into the duct with a driving fluid,
- a driving fluid chamber, arranged to receive the driving fluid supplied under pressure and to distribute the driving fluid into the duct with the elongated element,
- a lubricant chamber, arranged to receive a lubricant and to distribute the lubricant onto an outer surface of the elongated element, the lubricant chamber being located upstream (according to the travel of the elongated element) of the driving fluid chamber,

characterized in that the pressure housing comprises an upstream chamber, arranged to receive the pressurized driving fluid and located upstream of the lubricant chamber (according to the travel of the elongated element),
wherein the upstream chamber is a dead space for the received pressurized driving fluid.

The pressure housing of the device according to above embodiment comprises three distinct chambers. From entry port to exit port (following the elongated element travel direction), the order is as follows: the upstream chamber, the lubricant chamber and the driving fluid chamber. In other words, the lubricant chamber is located between the upstream chamber and the driving fluid chamber, so that a lubricant leak, even if it is in upstream direction, will be kept inside the pressure housing and lubricant will mix into the driving fluid (present in the upstream chamber and in the driving fluid chamber). Therefore, lubricant cannot leak outside the pressure housing. In addition, the three chambers are provided and formed by the pressure housing itself, so that the preparation work to install the device and to start the laying operation is lowered.

According to an embodiment, the pressure housing may comprise a fluid port to receive said pressurized driving fluid, and the fluid port may be arranged to feed the pressure housing with pressurized driving fluid downstream the lubricant chamber. In other words, the pressurized driving fluid is supplied in the pressure chamber at a location which is downstream the lubricant chamber (downstream in reference to the elongated element travelling direction). Therefore, the driving fluid can directly flow into the duct, without to pass through or around the lubricant chamber: the pressure housing remains compact and/or is free of bypass or pass-through channels to convey the driving fluid from a point located upstream the lubricant chamber to a point located downstream the lubricant chamber.

According to an embodiment, the fluid port may be arranged to feed the driving fluid chamber with pressurized driving fluid, and preferably, the fluid port may be arranged to feed the pressurized driving fluid directly into the driving fluid chamber. The pressure housing structure remains simple: the driving fluid under pressure is supplied directly into the driving fluid chamber and there, the pressurized driving fluid can flow into the duct (with the elongated element), without to pass through the lubricant chamber.

According to the invention, the upstream chamber is a dead space for the received pressurized driving fluid. According to an embodiment, the upstream chamber may be free of driving fluid exit and/or the upstream chamber may comprise a single fluid communication conduit to receive the pressurized driving fluid. In other words, there is no (or no significant) flow of driving fluid in or through the upstream chamber. The driving fluid in the upstream chamber may be defined as a static buffer to avoid any direct leak of lubricant outside of the pressure housing. If the pressurized driving fluid supplied into the pressure housing and flowing into the duct has a predetermined flow, then more than 90%, preferably more than 95% and more preferably more than 99% of said predetermined flow flows from the fluid port directly to the duct. It means that a really minor part of the flow (less than 10%, preferably less than 5% and more preferably less than 1%) flows into the upstream chamber. One should keep in mind that at starting step, when the pressure housing is still free from driving fluid, there is a preliminary phase where the pressure housing (driving fluid chamber and upstream chamber) has to be filled with the driving fluid, and during this preliminary phase, driving fluid has to flow into the upstream chamber). However, after this preliminary phase, there no flow or almost no flow of pressurized driving fluid in direction of the upstream chamber. Consequently, during established conditions of laying the elongated element, there is no driving fluid flow from the upstream chamber to the driving fluid chamber, neither through the lubricant chamber, nor around the lubricant chamber. The pressure housing remains compact.

According to an embodiment, the device may comprise a foam member arranged between the driving fluid chamber and the lubricant chamber. Such foam member forms a wall of the lubricant chamber and is in contact with lubricant. This allows uniform, gentle, reliable wiping and deposition of lubricant around the elongated element, with an effective separation to avoid massive leaking of lubricant into the driving fluid chamber.

According to an embodiment, the device may comprise a holder, receiving and maintaining the foam member in a working position in which the foam member is in contact with the elongated element, the holder being arranged between the foam member and the pressure housing. Such holder, an intermediate part between the pressure housing and the foam member allows easy change, easy repairing and modularity. When the pressure housing is made of an upper and lower parts (or two half parts), closing the upper part upon the lower part can in this way be done without the foam material getting in between, which would hinder fluid tight sealing.

According to an embodiment, the holder may be a ring, preferably a closed ring.

According to an embodiment, the pressure housing may comprise a groove or a recess to hold the holder in a predefined position along an axial direction of the elongated element.

As an example, the foam member may have a thickness of 15 mm-45 mm, for example 25 mm for a cable of Ø80 mm. The foam member may be made of polyester or polyether filter foam material.

According to an embodiment, the device may comprise a second foam member arranged between the upstream chamber and the lubricant chamber. Such second foam member forms a wall of the lubricant chamber and is in contact with lubricant. This provides an effective separation to avoid massive leaking of lubricant into the upstream chamber.

According to an embodiment, the device may comprise a second holder, receiving and maintaining the second foam member in a working position in which the second foam member is in contact with the elongated element, the second holder being arranged between the second foam member and the pressure housing. Such second holder, an intermediate part between the pressure housing and the second foam member allows easy change, easy repairing and modularity. When the pressure housing is made of an upper and lower parts (or two half parts), closing the upper part upon the lower part can in this way be done without the foam material getting in between, which would hinder fluid tight sealing.

According to an embodiment, the second holder may be a ring, preferably a closed ring.

According to an embodiment, the pressure housing may comprise a groove or a recess to hold the second holder in a predefined position along an axial direction of the elongated element.

As an example, the second foam member may have a thickness from 15 mm to 45 mm, for example 25 mm for a cable of Ø80 mm.

According to an embodiment, the second foam member may be made of polyester or polyether filter foam material.

According to an embodiment, the second holder and the holder may have same external dimensions so as to be exchangeable.

According to an embodiment, the device may comprise a lubricant conduit arranged between the lubricant chamber and the driving fluid chamber. This lubricant conduit ensures that an excessive pressure of lubricant will mix into the driving fluid.

According to an embodiment, the lubricant conduit may be mounted at an upper part of the pressure housing, preferably higher than the top of the cable in a vertical direction. According to this embodiment, when lubricant is denser than driving fluid, it naturally surrounds the cable when introduced into the driving fluid chamber.

According to an embodiment, the lubricant conduit may be arranged onto the holder.

According to an embodiment, the lubricant conduit may be a tube or pipe at least partially external to the pressure housing. The lubricant conduit may be arranged to supply lubricant into the driving fluid chamber. Installation of a lubricant conduit distinct from holder and/or pressure housing allows a compact design in axial direction (the elongated element axial direction).

According to an embodiment, the device may comprise a driving fluid conduit arranged between the upstream chamber and the driving fluid chamber. The driving fluid conduit provides a fluid communication between the upstream chamber and the driving fluid chamber.

According to an embodiment, the driving fluid conduit may be a tube or pipe at least partially external to the pressure housing. Installation of a driving fluid conduit distinct from pressure housing allows a compact design in axial direction (the elongated element axial direction). Preferably, the driving fluid conduit may be located at a lower part of pressure housing (in vertical direction), so no air void can accumulate in driving fluid conduit to block the working.

According to an embodiment, the entry port may comprise at least one of a lip seal and a guide block.

According to an embodiment, the device may comprise an external lubricating unit located upstream of the pressure housing.

According to an embodiment, the device may comprise driving means such as driving caterpillars or driving rollers, arranged to push the elongated element into the entry port.

According to an embodiment, the pressure housing may comprise two halves attached together to surround the elongated element. the specific embodiment provides an easy to install device.

According to an embodiment, the device may comprise a sealing element arranged between the pressure housing and the duct.

Preferably the sealing element between pressure housing and duct, the (cable) lip seal of the entry port and the holders with foam member are all non-divided and sleeved over the cable before mounted in the pressure housing and duct.

According to an embodiment, the driving fluid chamber may be arranged to surround the elongated element at least partially, and may be preferably arranged to fully surround the elongated element in a direction tangential to the elongated element.

According to an embodiment, the lubricant chamber may be arranged to surround the elongated element at least partially, and may be preferably arranged to fully surround the elongated element in a direction tangential to the elongated element.

According to an embodiment, the upstream chamber may be arranged to surround the elongated element at least partially, and may be preferably arranged to fully surround the elongated element in a direction tangential to the elongated element.

According to the invention, the upstream chamber is defining a dead volume to receive the driving fluid. In other words, the upstream chamber is a space where there is no flow of driving fluid. The upstream chamber provides a pressurized space to minimize or suppress lubricant leaks from the lubricant chamber, and to capture lubricant leaking from the lubricant chamber if necessary.

According to an embodiment, the driving fluid provided in the upstream chamber may be static, except to compensate leaks towards the outside of pressure housing and/or to the lubricant chamber.

According to an embodiment, the driving fluid chamber may have an ending or downstream section defined by or comprising the exit port.

According to an embodiment, the upstream chamber may have a starting or upstream section defined by or comprising the entry port.

A second aspect of the invention relates to an apparatus for installing an elongated element into a duct, comprising:
- the device for installing an elongated element into a duct according to the first aspect,
- a driving fluid supply unit, connected to the device for installing an elongated element into a duct and arranged to deliver the driving fluid under pressure to the driving fluid chamber,
- a lubricant supply unit, connected to the device for installing an elongated element into a duct and arranged to deliver the lubricant under pressure to the lubricant chamber.

According to an embodiment:
- the driving fluid supply unit is arranged to deliver the driving fluid at a first pressure,
- the lubricant supply unit is arranged to deliver the lubricant at the first pressure ± 10%, and preferably at a pressure exceeding the first pressure by 1 bar maximum, preferably at a pressure exceeding the first pressure by 0,5 bar maximum, and more preferably at a pressure exceeding the first pressure by 0.2 bar maximum.

According to an embodiment, the driving fluid may be air. The driving fluid may be liquid, preferably 90% water. The lubricant may be oil based, or water based with polymers, e.g. optionally with silicone additives. Alternatively, bentonite might be used to be dispersed in driving fluid.

Another aspect not encompassed by the claims relates to a method of installing an elongated element into a duct with the device of the first aspect, comprising the steps of:
- assembling the foam member and the second foam member into respectively the holder and the second holder,
- installing the lip seal over the elongated element,
- installing the foam member - holder assembly over the elongated element,
- installing the second foam member - second holder assembly over the elongated element,
- installing the sealing element over the duct,
- optionally attaching a pig to the elongated element,
- introducing the elongated element with the optional pig into the duct for a small distance, such at least 10 cm,
- placing the lip seal, the guide block, the holder, the second holder and the duct in a first half of the pressure housing, and installing the sealing element between first half of pressure housing and duct,
- attaching the second half of the pressure housing to the first half of the pressure housing to surround the lip seal, the guide block, the holder, the second holder, the sealing element, a portion of the duct and a portion of the elongated element with the pressure housing so as to form the driving fluid chamber, the lubricant chamber, and the upstream chamber.

In the present disclosure, an elongated element can equally designate a cable, a wire, a fibre, an optic fibre, a transport tube, a bundle or a combination of these articles. Typically, these elongated elements are sheathed with a protective sheath (made of insulating material, such as plastic), but they may be naked wires as well. These elongated elements can present a diameter of one (or less) or several millimetres, of several centimetres, and a length of several meters, several hundreds of meters, several kilometres.

In the present disclosure, a duct can equally designate a conduit, a tube, a pipe, any hollow passage into which the elongated element has to be laid. These ducts can be buried, and can present lengths of several meters, several hundreds of meters, several kilometres.

In the present disclosure, upstream and downstream directions are to be taken in regards to the elongated element travel direction. As an example, when focusing on the pressure housing, the entry port for elongated element and the exit port for elongated element provided in the pressure housing are respectively an upstream (entry) port and a downstream (exit) port.

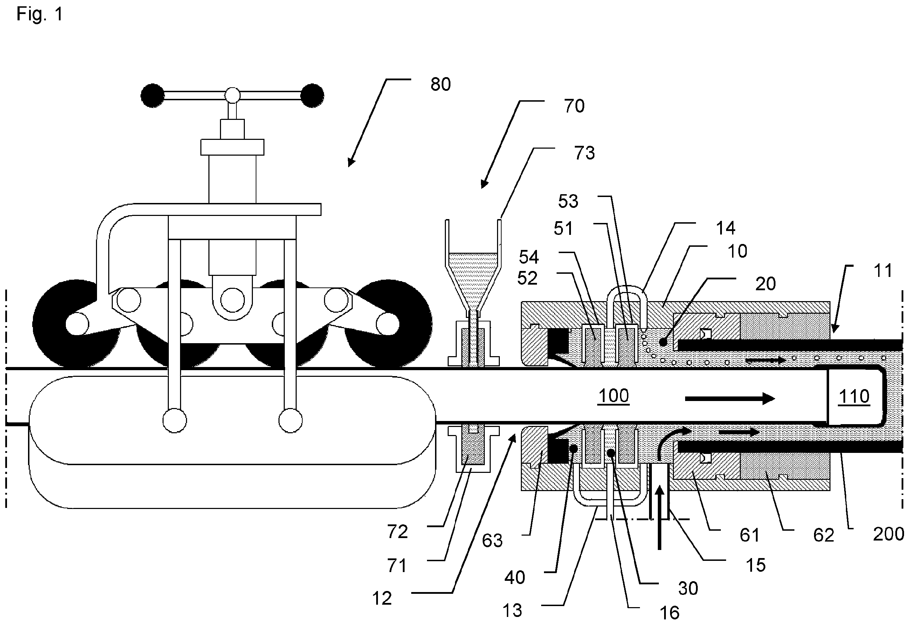

Other features and advantages of the present invention will appear more clearly from the following detailed description of particular non-limitative examples of the invention, illustrated by the appended drawings where figure 1 represents a schematic view of a device for installing an elongated element.

Figure 1 shows a general and simplified view of a device according to the invention. An elongated element 100 equipped at its front end with a sealing cap 110 is driven through a pressure housing 10 by driving means 80, to be laid or installed into a duct 200.

In detail, the present case shows an installation using a liquid to assist the introduction and travel of the elongated element 100 into the duct 200. Such method is generally called floating. A pulling pig might be used and then the method is called Water-Push-Pulling. Such pig can be attached to a foremost end of the elongated element, via for example a pulling eye, or cable stockings, or a (dividable) clamp attached to external surface of the elongated element.

The invention can however be implemented by assistance of gas (air) as driving fluid, and the method is called jetting or blowing.

The pressure housing 10 comprises a fluid port 15 to receive pressurized driving fluid from a driving fluid supply unit.

The general structure of the equipment involves the pressure housing 10 which is attached to the conduit 200, and which receives the elongated element 100 for introducing it into the duct 200 together with pressurized driving fluid. Movement of the elongated element 100 is caused by the action of a pushing force generated by the driving means 80 at the starting of installation, and after start, movement is caused by the combined action of the pushing force generated by the driving means 80 and of fluid drag (propelling) forces created by the driving fluid along the elongated element 100 when no pig is used as in present case (floating). The buoyancy effect provided by the driving fluid reduces the effective weight of the cable resulting in friction reduction and longer installation length. When a pig is used (no picture) also a local pulling force at the front end of the cable contributes to the installation.

The driving means 80 can comprise a caterpillar driven by an electric motor, and counter rollers (here four rollers) to clamp the elongated element 100 and ensure low or no slippage during propelling. However, other kinds of driving means can be used (with two caterpillars, with only rollers...). Typically (not shown), the elongated element 100 is stored on a reel located upstream of the driving means.

The pressure housing 10 holds a guide block 63 and a lip seal which define for the elongated element 100 an entry port 12 into the pressure housing 10.

The pressure housing 10 is coupled to the duct 200 by clamping rings 61 and 62 which define for the elongated element 100 an exit port 11 out of the pressure housing. To avoid leaks of driving fluid, the clamping ring 61 (preferably dividable) hold a sealing element (for example a seal, a O-ring, a gasket...) which contacts the outer surface of duct 200.

The installation of the elongated element 100 into the duct 200 might be facilitated by use of lubricant to reduce friction of elongated element 100 into duct 200. In this end the pressure housing 10 is designed to define three distinct chambers, located into the pressure housing 10, between the entry port 12 of the elongated element 100 and the exit port 11 of the elongated element 100.

Pressure housing 10 comprises foam member 51 with a holder 53 and a second foam member 52 with a second holder 54. The foam member 51 and the second foam member 52 can be rings made of polyester or polyether filter foam material and are surrounding the elongated element 100. The foam member 51 and the second foam member 52 are held and positioned in the pressure housing 10 by the holder 53 and the second holder 54 respectively, so as to partition the inner space of the pressure housing 10 into:
- an upstream chamber 40, located between the entry port 12 and the second foam member 52,
- a lubricant chamber 30, located between the second foam member 52 and the foam member 51,
- a driving fluid chamber 20 located between the foam member 51 and the exit port 11.

One should note that the elongated element 100 passes through the pressure housing 10 portions with the below sequence:
i- the entry port 12 (guide block 63 and lip seal)
ii- the upstream chamber 40,
iii- the lubricant chamber 30,
iv- the driving fluid chamber 20,
v- the exit port 1 (clamping rings 61, 63).

The pressure housing 10 comprises a lubricant port 16 for feeding and filling the lubricant chamber 30 with pressurized lubricant. The device comprises a lubricant conduit 14 which may be in present embodiment a (partly external) tube for providing a fluid communication between the lubricant chamber 30 and the driving fluid chamber 20.

As can be seen on figure 1, fluid port 15 communicates directly with the driving fluid chamber 20 to supply the latter with pressurized driving fluid. In particular, one can notice that the pressurized driving fluid, once in the driving fluid chamber 20, can flow directly through the exit port 1 and into the duct 200.

The device also comprises a driving fluid conduit 13 which may be in present embodiment a (partly external) tube for providing a fluid communication between the driving fluid chamber 20 and the upstream chamber 40. As can be seen on figure 1, the driving fluid conduit 13 has main purpose to fill the upstream chamber 40 during a preliminary phase prior to the established operation during which the elongated element 100 is introduced into the duct 200. In particular, after this preliminary phase, the upstream chamber 40 is full of driving fluid and there is no or almost no flow of driving fluid through the driving fluid conduit 13: the driving fluid flow supplied through the fluid port 15 can solely escape into the duct 200.

To enhance the introduction of the elongated element 100 into the pressure housing 10, an external lubricating unit 70 can optionally be provided between the driving means 80 and the pressure housing 10. This external lubricating unit 70 can comprise an external foam member 72 with a 360° internal groove around the elongated element 100, held by an external holder 71 and connected to an external lubricant reservoir 73 to deposit lubricant by gravity.

To facilitate the preparation of the device, the pressure housing 10 might be provided in two separate parts, or halves, which are coupled together to sandwich the guide block 63, lip seal, second holder 54, holder 53, clamping rings 61, 62... Guide block 63, clamping rings 61, 62 are preferably dividable.

In practice, each half of guide block 63, clamping rings 61, 62 has a mating shape and the pressure housing (also dividable) has a counter-mating shape. These mating shapes and counter-mating shapes can be grooves-ribs, pins-holes, bolts-screws. Therefore, when preparing the lower half of pressure housing, one can put or place the respective halves of guide block 63, clamping rings 61, 62 in correct position, and the same applies to the upper half of pressure housing. To maintain in place the components in the upper half of pressure housing, one can provide the parts with snap fit, or screws, or light press fit structure. When all half-parts are coupled to their respective half of pressure housing, the pressure housing halves can be attached together. Of course, the non-dividable parts (foam members and holders, lip seals...) are previously placed over the elongated element 100 and prepositioned in the correct axial position in respect to one half of pressure housing (preferably the lower part).

In the present example, the driving fluid can be a liquid and more preferably water, fresh water or salt water. The lubricant can be oil or water based. The elongated element can be a power cable having a diameter of 80 mm, sheathed with plastic.

During operation, the elongated element 100 is pushed into the pressure housing 10 by the driving means 80. The external lubricating unit 70 deposits a thin lubricant layer onto the elongated element 100, thus facilitating the passage through the guide block 63 and lip seal.

Pressurized driving fluid is supplied to the fluid port 15 at a pressure comprised in a range of values from 0 bar to 16, 20 or even 25 bar. The driving fluid fills the driving fluid chamber 20, the upstream chamber 40 (via the driving fluid conduit 13) and flows into the duct 200 with the elongated element 100.

Once the upstream chamber 40 is fully filled with driving fluid, all the driving fluid flows directly from fluid port 15 to duct 200 (as shown by the arrows on figure 1). In particular, during established operation, there is no flow of driving fluid from the upstream chamber 40 to the driving fluid chamber 20 (except a small reverse flow mainly via conduit 13 to compensate unexpected leaks through lip seal and guide block 63). Consequently, there is no flow of driving fluid through or around the lubricant chamber 30. This allows to design and keep a compact pressure housing 10. Indeed, if the driving fluid had to pass through or around the lubricant chamber 30, it would be necessary to provide a passage arranged in parallel to the lubricant chamber 30 and having about same area than the passage space in the duct 200 defined between duct 200 and elongated element 100. This would negatively increase the size of the pressure housing 10.

Simultaneously, pressurized lubricant is supplied to the lubricant chamber 30 via lubricant port 16 at a pressure equal or preferably exceeding a little the pressure applied to the driving fluid. As an example, if the driving fluid pressure is 8 bar, the lubricant pressure can be 8.5 bar, preferably 8.2 bar or 8.1 bar.

Consequently, the lubricant fills the lubricant chamber 30, impregnates the foam member 51, the second foam member 52, can adhere to the elongated element 100 to ensure presence of lubricant layer onto the elongated element 100 and lubricant in excess exits the lubricant chamber 30 via the lubricant conduit 14 to be mixed into the driving fluid in the driving fluid chamber 20 and flowing into the duct 200, as shown figure 1.

The present device provides an accurate dosage of lubricant into the driving fluid, because of specific structure (lubricant chamber 30 distinct from driving fluid chamber 20 and from upstream chamber 40, lubricant conduit 14 feeding the driving fluid chamber 20).

In addition, one should note that the lubricant can leak out of the lubricant chamber 30 only into the driving fluid chamber 20 and/or into the upstream chamber 40. Therefore, lubricant leaks out of lubricant chamber 30 are not causing any external lubricant leaks: the device collects the leaking lubricant into the driving fluid. If the upstream chamber 40 leaks via the lip seal and guide block 63, it will be pressurized driving fluid (water) which will leak outside, with less severe consequences compared to an external leak of lubricant. Indeed, external lubricant leaks should be avoided for environmental reasons, and pressurized lubricant projected onto the driving means can cause slippage issues.

Note that, along vertical direction, lubricant conduit 14 is positioned above the pressure housing 10. In case the lubricant is denser than the driving fluid, the lubricant could flow out the reservoir at a lower level than needed for entirely surrounding the cable in case the lubricant conduit 14 is placed on the lower part of the pressure housing, so this waste is avoided. Also, the lubricant port 16 is then preferably placed at the lower part, so the lubricant will always pass (surrounds) the cable when flown out through the lubricant conduit 14.

Note that, along vertical direction, the driving fluid conduit 13 is positioned below the pressure housing 10, to avoid any air bubble or void which could block passage of driving fluid.

It is of course understood that obvious improvements and/or modifications for one skilled in the art may be implemented, still being under the scope of the invention as it is defined by the appended claims.

In particular, the lubricant conduit 14, shown as a tube external and distinct from the pressure housing 10, can be provided as a groove or a hole passing through the holder 53, to provide a fluid communication between the lubricant chamber 30 and the driving fluid chamber 20. Also, the driving fluid conduit 13, shown external and distinct from the pressure housing 10, can be provided as an internal conduit in the pressure housing 10 between the upstream chamber 40 and the driving fluid chamber 20, or as a derivation from the fluid port 15, as Y junction for example.

In the above example, the driving fluid is liquid and more preferably water, fresh water or salt water. The lubricant is oil or water based. The elongated element is a power cable having a diameter of approx. 80 mm, sheathed with plastic. However, the device depicted figure 1 can be used for other applications with other fluids and for other sizes of elongated element 100.

Optionally (not shown) a little dose rate of driving fluid (water) can be fed into the upstream chamber 40 through a small water port (not shown) at a pressure slightly higher than the pressure in the driving fluid chamber 20 to continuously dilute the fluid in the upstream chamber 40, to avoid accumulation (saturation) of lubricant in upstream chamber 40.

## Claims

1. Device for installing an elongated element (100) into a duct (200), comprising a pressure housing (10) having:
- an entry port (12) for receiving the elongated element (100),
- an exit port (11) arranged to be connected to the duct (200) for introducing the elongated element (100) into the duct (200) with a driving fluid,
- a driving fluid chamber (20), arranged to receive the driving fluid supplied under pressure and to distribute the driving fluid into the duct (200) with the elongated element (100),
- a lubricant chamber (30), arranged to receive a lubricant and to distribute the lubricant onto an outer surface of the elongated element (100), the lubricant chamber (30) being located upstream of the driving fluid chamber (20),
wherein the pressure housing (10) comprises an upstream chamber (40), arranged to receive the pressurized driving fluid and located upstream of the lubricant chamber (30),
**characterized in that** the upstream chamber (40) is a dead space for the received pressurized driving fluid.

2. The device according to claim 1, wherein the pressure housing (10) comprises a fluid port (15) to receive said pressurized driving fluid, and wherein the fluid port (15) is arranged to feed the pressure housing (10) with pressurized driving fluid downstream the lubricant chamber (30).

3. The device according to claim 1 or 2, wherein the fluid port (15) is arranged to feed the driving fluid chamber (20) with pressurized driving fluid, and preferably, the fluid port (15) is arranged to feed directly the driving fluid chamber (20) with pressurized driving fluid.

4. The device according to any one of claims 1 to 3, comprising a foam member (51) arranged between the driving fluid chamber (20) and the lubricant chamber (30).

5. The device according to claim 4, comprising a holder (53), receiving and maintaining the foam member (51) in a working position in which the foam member (51) is in contact with the elongated element (100), the holder (53) being arranged between the foam member (51) and the pressure housing (10).

6. The device according to any one of claims 1 to 5, comprising a second foam member (52) arranged between the upstream chamber (40) and the lubricant chamber (30).

7. The device according to claim 6, comprising a second holder (54), receiving and maintaining the second foam member (52) in a working position in which the second foam member (52) is in contact with the elongated element (100), the second holder (54) being arranged between the second foam member (52) and the pressure housing (10), and wherein the second holder (54) and the holder (53) have same external dimensions so as to be exchangeable.

8. The device according to any one of claims 1 to 7, comprising a lubricant conduit (14) arranged between the lubricant chamber (30) and the driving fluid chamber (20).

9. The device according to claim 8, wherein the lubricant conduit (14) is mounted at an upper part of the pressure housing (10), preferably higher than the top of the elongated element (100) in a vertical direction.

10. The device according to claim 8 or 9, in their dependency to any one of claims 7 to 8, wherein the lubricant conduit (14) is arranged onto the holder (53).

11. The device according to any one of claims 1 to 10, comprising a driving fluid conduit (13) arranged between the upstream chamber (40) and the driving fluid chamber (20).

12. The device according to any one of claims 1 to 11, wherein the entry port (12) comprises at least one of a lip seal and a guide block (63).

13. The device according to any one of claims 1 to 12, comprising an external lubricating unit (70) located upstream of the pressure housing (10).

14. Apparatus for installing an elongated element (100) into a duct (200), comprising:
- the device for installing an elongated element (100) into a duct (200) according to any one of claims 1 to 13,
- a driving fluid supply unit, connected to the device for installing an elongated element (100) into a duct (200) and arranged to deliver the driving fluid under pressure to the driving fluid chamber (20),
- a lubricant supply unit, connected to the device for installing an elongated element (100) into a duct (200) and arranged to deliver the lubricant under pressure to the lubricant chamber (30).

## Patentansprüche

1. Vorrichtung zum Installieren eines länglichen Elements (100) in einem Kanal (200), umfassend ein Druckgehäuse (10) mit:
- einem Einlassanschluss (12) zum Aufnehmen des länglichen Elements (100),
- einem Auslassanschluss (11), der dazu eingerichtet ist, mit dem Kanal (200) verbunden zu werden, um das längliche Element (100) in den Kanal (200) mit einem Antriebsfluid einzuführen,
- einer Antriebsfluidkammer (20), die dazu eingerichtet ist, das unter Druck zugeführte Antriebsfluid aufzunehmen und das Antriebsfluid in den Kanal (200) mit dem länglichen Element (100) zu verteilen,
- einer Schmiermittelkammer (30), die dazu eingerichtet ist, ein Schmiermittel aufzunehmen und das Schmiermittel auf eine Außenfläche des länglichen Elements (100) zu verteilen,
wobei die Schmiermittelkammer (30) stromaufwärts der Antriebsfluidkammer (20) angeordnet ist,
wobei das Druckgehäuse (10) eine stromaufwärtige Kammer (40) umfasst, die dazu eingerichtet ist, das unter Druck stehende Antriebsfluid aufzunehmen und stromaufwärts der Schmiermittelkammer (30) angeordnet ist,
**dadurch gekennzeichnet, dass**
die stromaufwärtige Kammer (40) ein Totraum für das aufgenommene unter Druck stehende Antriebsfluid ist.

2. Vorrichtung nach Anspruch 1, wobei das Druckgehäuse (10) einen Fluidanschluss (15) zum Aufnehmen des unter Druck stehenden Antriebsfluids umfasst, und wobei der Fluidanschluss (15) dazu eingerichtet ist, das Druckgehäuse (10) mit unter Druck stehendem Antriebsfluid stromabwärts der Schmiermittelkammer (30) zu speisen.

3. Vorrichtung nach Anspruch 1 oder 2, wobei der Fluidanschluss (15) dazu eingerichtet ist, die Antriebsfluidkammer (20) mit unter Druck stehendem Antriebsfluid zu speisen, und vorzugsweise der Fluidanschluss (15) dazu eingerichtet ist, die Antriebsfluidkammer (20) direkt mit unter Druck stehendem Antriebsfluid zu speisen.

4. Vorrichtung nach einem der Ansprüche 1 bis 3, umfassend ein Schaumstoffelement (51), das zwischen der Antriebsfluidkammer (20) und der Schmiermittelkammer (30) angeordnet ist.

5. Vorrichtung nach Anspruch 4, umfassend einen Halter (53), der das Schaumstoffelement (51) in einer Arbeitsposition aufnimmt und hält, in der das Schaumstoffelement (51) in Kontakt mit dem länglichen Element (100) ist, wobei der Halter (53) zwischen dem Schaumstoffelement (51) und dem Druckgehäuse (10) angeordnet ist.

6. Vorrichtung nach einem der Ansprüche 1 bis 5, umfassend ein zweites Schaumstoffelement (52), das zwischen der stromaufwärtigen Kammer (40) und der Schmiermittelkammer (30) angeordnet ist.

7. Vorrichtung nach Anspruch 6, umfassend einen zweiten Halter (54), der das zweite Schaumstoffelement (52) in einer Arbeitsposition aufnimmt und hält, in der das zweite Schaumstoffelement (52) in Kontakt mit dem länglichen Element (100) ist, wobei der zweite Halter (54) zwischen dem zweiten Schaumstoffelement (52) und dem Druckgehäuse (10) angeordnet ist, und wobei der zweite Halter (54) und der Halter (53) die gleichen Außenabmessungen aufweisen, um austauschbar zu sein.

8. Vorrichtung nach einem der Ansprüche 1 bis 7, umfassend eine Schmiermittelleitung (14), die zwischen der Schmiermittelkammer (30) und der Antriebsfluidkammer (20) angeordnet ist.

9. Vorrichtung nach Anspruch 8, wobei die Schmiermittelleitung (14) an einem oberen Teil des Druckgehäuses (10) montiert ist, vorzugsweise höher als die Oberseite des länglichen Elements (100) in einer vertikalen Richtung.

10. Vorrichtung nach Anspruch 8 oder 9, in ihrer Rückbeziehung auf einen der Ansprüche 7 bis 8, wobei die Schmiermittelleitung (14) auf dem Halter (53) angeordnet ist.

11. Vorrichtung nach einem der Ansprüche 1 bis 10, umfassend eine Antriebsfluidleitung (13), die zwischen der stromaufwärtigen Kammer (40) und der Antriebsfluidkammer (20) angeordnet ist.

12. Vorrichtung nach einem der Ansprüche 1 bis 11, wobei der Einlassanschluss (12) mindestens eine Lippendichtung und einen Führungsblock (63) umfasst.

13. Vorrichtung nach einem der Ansprüche 1 bis 12, umfassend eine externe Schmiereinheit (70), die stromaufwärts des Druckgehäuses (10) angeordnet ist.

14. Apparatur zum Installieren eines länglichen Elements (100) in einem Kanal (200), umfassend:
- die Vorrichtung zum Installieren eines länglichen Elements (100) in einem Kanal (200) nach einem der Ansprüche 1 bis 13,
- eine Antriebsfluid-Versorgungseinheit, die mit der Vorrichtung zum Installieren eines länglichen Elements (100) in einem Kanal (200) verbunden und dazu eingerichtet ist, das Antriebsfluid unter Druck an die Antriebsfluidkammer (20) zu liefern,
- eine Schmiermittel-Versorgungseinheit, die mit der Vorrichtung zum Installieren eines länglichen Elements (100) in einem Kanal (200) verbunden und dazu eingerichtet ist, das Schmiermittel unter Druck an die Schmiermittelkammer (30) zu liefern.

## Revendications

1. Dispositif pour installer un élément allongé (100) dans un conduit (200),
comprenant un boîtier sous pression (10) ayant :
- un orifice d'entrée (12) pour recevoir l'élément allongé (100),
- un orifice de sortie (11) agencé pour être raccordé au conduit (200) pour introduire l'élément allongé (100) dans le conduit (200) avec un fluide moteur,
- une chambre de fluide moteur (20), agencée pour recevoir le fluide moteur fourni sous pression et pour distribuer le fluide moteur dans le conduit (200) avec l'élément allongé (100),
- une chambre de lubrifiant (30), agencée pour recevoir un lubrifiant et pour distribuer le lubrifiant sur une surface extérieure de l'élément allongé (100), la chambre de lubrifiant (30) étant située en amont de la chambre de fluide moteur (20),
dans lequel le boîtier sous pression (10) comprend une chambre amont (40), agencée pour recevoir le fluide moteur pressurisé et située en amont de la chambre de lubrifiant (30),
**caractérisé en ce que**
la chambre amont (40) est un espace mort pour le fluide moteur pressurisé reçu.

2. Dispositif selon la revendication 1, dans lequel le boîtier sous pression (10) comprend un orifice de fluide (15) pour recevoir ledit fluide moteur pressurisé, et dans lequel l'orifice de fluide (15) est agencé pour alimenter le boîtier sous pression (10) en fluide moteur pressurisé en aval de la chambre de lubrifiant (30).

3. Dispositif selon la revendication 1 ou 2, dans lequel l'orifice de fluide (15) est agencé pour alimenter la chambre de fluide moteur (20) en fluide moteur pressurisé, et de préférence, l'orifice de fluide (15) est agencé pour alimenter directement la chambre de fluide moteur (20) en fluide moteur pressurisé.

4. Dispositif selon l'une quelconque des revendications 1 à 3, comprenant un élément en mousse (51) agencé entre la chambre de fluide moteur (20) et la chambre de lubrifiant (30).

5. Dispositif selon la revendication 4, comprenant un support (53), recevant et maintenant l'élément en mousse (51) dans une position de travail dans laquelle l'élément en mousse (51) est en contact avec l'élément allongé (100), le support (53) étant agencé entre l'élément en mousse (51) et le boîtier sous pression (10).

6. Dispositif selon l'une quelconque des revendications 1 à 5, comprenant un second élément en mousse (52) agencé entre la chambre amont (40) et la chambre de lubrifiant (30).

7. Dispositif selon la revendication 6, comprenant un second support (54), recevant et maintenant le second élément en mousse (52) dans une position de travail dans laquelle le second élément en mousse (52) est en contact avec l'élément allongé (100), le second support (54) étant agencé entre le second élément en mousse (52) et le boîtier sous pression (10), et dans lequel le second support (54) et le support (53) ont les mêmes dimensions extérieures de sorte à être interchangeables.

8. Dispositif selon l'une quelconque des revendications 1 à 7, comprenant un conduit de lubrifiant (14) agencé entre la chambre de lubrifiant (30) et la chambre de fluide moteur (20).

9. Dispositif selon la revendication 8, dans lequel le conduit de lubrifiant (14) est monté à une partie supérieure du boîtier sous pression (10), de préférence plus haut que le sommet de l'élément allongé (100) dans une direction verticale.

10. Dispositif selon la revendication 8 ou 9, dans leur dépendance à l'une quelconque des revendications 7 à 8, dans lequel le conduit de lubrifiant (14) est agencé sur le support (53).

11. Dispositif selon l'une quelconque des revendications 1 à 10, comprenant un conduit de fluide moteur (13) agencé entre la chambre amont (40) et la chambre de fluide moteur (20).

12. Dispositif selon l'une quelconque des revendications 1 à 11, dans lequel l'orifice d'entrée (12) comprend au moins un joint à lèvre et un bloc de guidage (63).

13. Dispositif selon l'une quelconque des revendications 1 à 12, comprenant une unité de lubrification externe (70) située en amont du boîtier sous pression (10).

14. Appareil pour installer un élément allongé (100) dans un conduit (200), comprenant :
- le dispositif pour installer un élément allongé (100) dans un conduit (200) selon l'une quelconque des revendications 1 à 13,
- une unité d'alimentation en fluide moteur, raccordée au dispositif pour installer un élément allongé (100) dans un conduit (200) et agencée pour délivrer le fluide moteur sous pression à la chambre de fluide moteur (20),
- une unité d'alimentation en lubrifiant, raccordée au dispositif pour installer un élément allongé (100) dans un conduit (200) et agencée pour délivrer le lubrifiant sous pression à la chambre de lubrifiant (30).
